# EUROPEAN PATENT APPLICATION

(11) **EP 1 632 135 A1**
(43) Date of publication of application: **08.03.2006**
(21) Application number: 04019562.0
(22) Date of filing: 18.08.2004
(51) Int. Cl.: A23F 5/16, A23F 5/18

(54) **Inert, glassy matrices for the stabilization of aroma in soluble coffee**

(71) Applicant: NESTEC S.A., 1800 Vevey (CH)
(72) Inventor: Gretsch, Catherine, 1412 Valeyres-sous-Ursins (CH); Kraehenbuehl, Karin, 1926 Fully (CH); Schoonmann, Johanna Hendrika, 1820 Montreux (CH); Ubbink, Johan Bernard, La Claie-aux-Moines 1073 Savigny (CH)
(74) Representative: Archambault, Jean

(57) **Abstract**

A glassy matrix for coffee aroma is provided in which the level of compounds which degrade aroma has been reduced, enabling the production of improved soluble coffee powder.

## Description

### Field of the invention

Apart from their stimulating effects, coffee beverages are appreciated for their sensory characteristics. The most important of these sensory characteristics are the smell and taste of the prepared coffee beverage.

The aim of producers of soluble coffee, is usually to try and recreate the sensory characteristics of a freshly produced roast and ground coffee as faithfully as possible. Occasionally, in the development and production of soluble coffee, the principal focus is to develop sensory characteristics different from a traditional roast and ground coffee, but the aim is invariably to optimize the sensory profile of the soluble coffee in such a way that consumer preference is best satisfied.

The sensory characteristics of soluble coffee are dependent in a complicated way on the coffee blend used in its manufacture, the roasting conditions, the efficiency of aroma recovery, the drying technology, the storage conditions of the powder, and the way the soluble coffee is prepared by the consumer. Current soluble coffee developments are facilitated because, nowadays, for some of the sensory characteristics of soluble coffee, correlations are well established between the sensory characteristics and chemical, structural and physical properties of the soluble coffee.

For instance, the important sensory characteristic of the aroma of a soluble coffee beverage is the result of the impact of a complex but balanced mixture of about 800 volatile compounds on the olfactory epithelium. Many physico-chemical and sensory properties of these around 800 compounds are known and it is also known how they contribute to the character of coffee aroma. The volatile aroma compounds are largely formed during the roasting process and are partially incorporated in the final soluble coffee powder. During preparation of the soluble coffee beverage, the coffee powder dissolves, and the aroma compounds are released to the olfactory epithelium via a number of intermediate steps.

For a long time it has been known that from the liquid fraction extracted from the coffee bean during controlled extraction operations, an amorphous, glassy state can be formed upon drying. It is this glassy state which allows the manufacture of soluble coffee in powder form. Also, in this glassy state, coffee aroma compounds can easily be incorporated, giving rise to a soluble coffee containing entrapped coffee aroma.

One of the key problems experienced with soluble coffee is that its aroma strength and quality diminish with storage time of the powder. This loss of aroma strength and quality manifests itself even during the storage of soluble coffee under close-to-optimal storage conditions (a low moisture content, inert atmosphere and ambient temperature) and during the common shelf life of a soluble coffee, usually one year. However, it is gravely worsened under adverse storage conditions like enhanced levels of moisture, elevated temperatures or presence of oxygen.

The diminution of the quality and strength of the aroma of soluble coffee during storage is largely caused by the interaction and reaction of many of the high-impact aroma compounds from soluble coffee with numerous classes of non-volatile compounds present in the soluble coffee matrix. These non-volatile compounds are amongst those extracted from the roast and ground coffee and end up in the extract used to prepare the glassy matrix of the soluble coffee powder.

In order to better preserve the strength and quality of soluble coffee, it would therefore be of major interest if a solid, glassy matrix suitable for the incorporation of aroma could be prepared from coffee with reduced levels of the classes of non-volatile compounds responsible for the degradation of the aroma.

### Prior art

In patent application JP 02-104242, ultrafiltration is listed as technique to prepare a liquid foodstuff with inhibitory characteristics for the deterioration of coffee aroma. There is no suggestion that this procedure could be used to prepare glassy coffee material with improved storage characteristics.

On the other hand in Zanoni et al., Lebensmittel-Wissenschaft und ―Technologie 25(3), 271-274 (1992), mention is made of ultrafiltration to prepare a liquid coffee extract with improved keeping characteristics of the coffee aroma. Surprisingly, and in contradiction to our findings, it is found that the permeate improves the stability of the coffee aroma in a liquid, compounded foodstuff. If anything, the permeate would be expected to contain aroma degrading components so that there appears to be no unified scientific understanding of the roles of ultrafiltration and the resulting permeate and retentate on the stability of sensitive active ingredients, including coffee aroma.

In CA 1157310, ultrafiltration and reverse osmosis are used in parallel to prepare an extract for soluble coffee manufacturing. However, >99% of all solids from the ultrafiltration step are retained, which is clearly too high to significantly reduce the aroma degrading potential of the coffee solids.

In the article 'Flavor Delivery Systems' in the Kirk-Othmer Encyclopedia of Chemical Technology, on-line edition, an extensive discussion is provided of the various technologies to prepare delivery and encapsulation systems for aromas and flavors. No mention is made, however, of any technology to remove aroma-degrading compounds from a matrix composition prior to its use as encapsulation matrix for aroma compounds.

In conclusion, we are not aware of any prior art that addresses the issue of the degradation of aroma compounds entrapped in a soluble coffee matrix and the perspectives to minimize this degradation.

### Description of the Invention

Traditionally, soluble coffee is prepared from roast and ground coffee by the aqueous extraction of the roast and ground coffee, concentration of the aqueous coffee extract to a concentrated dispersion and drying of the concentrated dispersion to provide a soluble coffee powder in the glassy state.

The coffee aroma, which is generated during the roasting of the coffee beans, is partially recovered during this process and is reintroduced into the concentrated coffee extract prior to drying. After drying, the coffee aroma is entrapped in the soluble coffee matrix, which is in the glassy state.

The strength and quality of the aroma of soluble coffee diminishes continuously during its shelf life, the kinetics of degradation depending on the storage conditions of the soluble coffee powder. This degradation of the coffee aroma is largely caused by the interaction and reaction of aroma compounds with constituents of the glassy coffee matrix.

The invention thus provides an inert, glassy matrix for the entrapment of coffee aroma in which at least a proportion of the compounds normally present in aqueous coffee extract, which degrade impact compounds in coffee aroma have been removed.

The invention also provides soluble coffee comprising the glassy matrices of the invention and entrapped aroma.

The resultant soluble coffee has improved stability of the aroma entrapped therein. As regulatory requirements generally imply that for the designation 'soluble coffee' only water-soluble ingredients from the roast coffee bean may be present in the final product, one is strongly limited in the materials one can use and none of the usual solutions available in the flavor encapsulation and delivery field can be used to meet the requirements posed.

The essence of our invention is that, in order to limit this degradation, the aroma degrading compounds are largely or virtually completely removed from the coffee extract while maintaining the capability of the soluble coffee matrix to form a glassy state at sufficiently low water contents and at ambient temperature.

The modification of the composition of the coffee extract is carried out in such a way that 1) a significant part, preferably virtually all aroma degrading compounds are removed from the coffee extract and 2) the treated matrices retain the capability to form a glassy state suitable for the entrapment of coffee aroma. The preferred methods are by treatment with immobilized polyvinylpyrrolidone (PVP) or polyvinylpolypyrrolidone (PVPP), and especially the latter, or by ultrafiltration.

The term "immobilized polyvinylpyrrolidone" means PVP grafted on a solid or polymeric support, such as silica, polystyrene, and dextran.

The soluble coffee can then be produced from the treated matrices, by means known in the art, including for example optional concentration of the treated coffee extract, the reintroduction of an aroma fraction in the coffee extract prior to drying, and the drying of the aroma-containing extract following procedures established in the field to yield an aromatized soluble coffee powder in the glassy state with improved sensory characteristics and an improved stability of the entrapped aroma. Optionally, the remaining reactive non-aromatized matrix may be dried and recombined after drying with the glassy inert coffee matrix containing the entrapped coffee aroma.

The removal of the aroma degrading compounds is usually carried out on the vapor stripped, optionally concentrated coffee extract prior to the reintroduction of the coffee aroma. The treatment of the coffee extract can be carried out at any convenient solids content or the coffee extract, as long as it remains in the liquid state. Usually, however, the optimal concentration at which either treatment is carried out is determined by processing requirements and the degree of removal of the aroma degrading compounds, which needs to be attained.

The PVPP or PVP treatment of the coffee extract can be carried out following any procedure known to the person skilled in the art. Two convenient ways of carrying out this operation are 1) by mixing PVPP or the immobilized PVP at the desired concentration with the coffee extract, incubating the mixture for the required time and removing the PVPP or PVP with the bound aroma-degrading compounds by filtration or centrifugation or 2) by passing the coffee extract over a column of sufficient dimensions and capacity containing PVPP or immobilized PVP.

Ultrafiltration of the coffee extract is carried out using an ultrafiltration membrane with a molecular weight cut-off depending on the size fraction of molecules to be removed. Techniques by which this ultrafiltration is carried out are known to the person skilled in the art, and include flat, spiral, and hollow fiber techniques. The ultrafiltration process may be run in various modes, like dead-end, cross-flow and back-flush operating modes.

Depending on the solids content after removal of the aroma-degrading compounds, the extract may optionally be subjected to a concentration step to remove excess water. This concentration may be carried out following any of the common procedures used for this purpose, for instance by evaporation and by reverse osmosis.

Prior to drying, the coffee aroma may be added, either in the form of a concentrated aroma fraction, an aqueous solution or an oil-based concentrate. The subsequent drying of the aroma-containing extract is carried out in such a way that the aroma losses during drying are minimized and a powder is obtained which is in the glassy state at ambient temperature. The soluble coffee powder displays enhanced sensory characteristics and an improved stability of the entrapped coffee aroma.

"Coffee aroma" is used according to the present invention to mean the mixture of volatile compounds, which provide those odor/flavor sensations of coffee as experienced by the drinker by stimulating receptor cells in the olfactory epithelium. Aroma compounds enter the nasal cavity either externally by sniffing through the nose (then the odorant molecule is perceived as an odor) or internally by drinking via the retronasal cavity at the back of the mouth and throat (then it is perceived as a flavor). There are many hundreds of compounds in coffee aroma which have been identified as contributing to the aroma of coffee, some of the most important of which are 2,3-butanedione, 2,3-pentanedione, 1-methylpyrrole, furfuryl thiol (FFT), 1 H-pyrrole, methanethiol, ethanethiol, propanal, butanal, ethanal, methyl formate, methyl acetate, methylfuran, 2-butanone, methanol, ethanol, propanol, pyrazine, furfural, dimethyl sulfide, 4-hydroxy-2,5-dimethyl-3(2*H*)-furanone, 2-methylbutanal, 2(5)-ethyl-4-hydroxy-5(2)-methyl-3(2*H*)-furanone, methylpropanal, 4-ethenyl-2-methoxyphenol, 3-methylbutanal, vanillin, 2-methoxyphenol, 3-hydroxy-4,5-dimethyl-2(5*H*)-furanone, 4-ethyl-2-methoxyphenol, 2-ethyl-3,5-dimethylpyrazine, methional, 3-mercapto-3-methylbutylformate, 2,3-diethyl-5-methylpyrazine, (*E*)-β-damascenone, 3-isobutyl-2-methoxypyrazine, 2-methyl-3-furanthiol, 2-ethenyl-3,5-dimethylpyrazine, 3-methyl-2-butene-1-thiol and 2-ethenyl-3-ethyl-5-methylpyrazine.

One of the key problems experienced with soluble coffee is that its aroma strength and quality diminish with storage time of the powder. This loss of aroma strength and quality manifests itself even during the storage of soluble coffee under close-to-optimal storage conditions (a low moisture content, inert atmosphere and ambient temperature) and during the common shelf life of a soluble coffee, usually one to two years. However, it is gravely worsened under adverse storage conditions like enhanced levels of moisture, presence of oxygen or elevated temperatures.

Apart from being volatile, many of the key impact compounds from coffee aroma are chemically sensitive and may react among themselves or with a variety of other compounds. Such reactions can take place for instance with other aroma compounds, with atmospheric oxygen, with water and with constituents of the glassy coffee matrix.

It has been found that the diminution of the quality and strength of the aroma of soluble coffee during storage is largely caused by the interaction and reaction of many of the high-impact aroma compounds from soluble coffee with numerous classes of compounds present in the soluble coffee matrix. During the roasting of the green coffee beans, a whole range of intricately complex chemical reactions takes place, of which an important part may be grouped under the general heading of Maillard reactions. Whereas these reactions induce the formation of the coffee aroma and compounds and thus are responsible for the creation of the typical aroma of coffee, they also induce a whole plethora of reactions leading to non-volatile compounds which are not a priori desirable but which are nevertheless retained in the soluble coffee matrix. Briefly stated, during the roasting of the green coffee, desirable and undesirable compounds are produced at the same time and the undesirable compounds are largely responsible for the limited stability of the coffee aroma in soluble coffee.

In finding a solution to this problem, it should be kept in mind that designation 'soluble coffee' generally implies that only water-soluble ingredients from the roast coffee bean may be present in the final product. One is therefore limited in the materials, which can be used, and none of the usual solutions available in the flavor encapsulation and delivery field can be used to fulfill the requirements posed.

Usually, soluble coffee is prepared from roast and ground coffee according to the following principal steps. In the first place, the roast and ground coffee is extracted with water and/or steam under specific process conditions. These process conditions, which for instance include the temperature and pressure during extraction and the duration of the extraction process, are carefully tuned in order to extract the desired constituents from the coffee bean. As described below, aroma is usually stripped from the coffee either before or after the extraction. The extract is generally afterwards concentrated into a concentrated dispersion of coffee solids. After reintroduction of the stripped coffee aroma, the concentrated dispersion is subsequently dried to yield a soluble coffee powder in the glassy state. Depending on the final application and the preference of the consumer, the soluble coffee powder may be dried by any of the common drying techniques used in food manufacturing, like, most commonly, spray drying or freeze drying.

An important part of the manufacturing process of soluble coffee is the way coffee aroma is recovered and introduced into the soluble coffee. To achieve this, a variety of processes are commercially used. Although they differ considerably in the manner and efficiency by which the coffee aroma is extracted during the soluble coffee manufacturing process, these processes have all in common that the aroma recovered during the process is present in or added to the concentrated coffee extract prior to drying. This is for instance carried out by stripping off part of the volatile aroma before or just after extraction and reintroducing the stripped aroma before drying. Upon drying of the concentrated coffee extract, a soluble coffee powder in the so-called glassy state is obtained in which the coffee aroma is entrapped.

Of importance in the manufacturing of soluble coffee is to carry out the extraction in such a way that the extract displays a molecular weight distribution enabling later drying to a powder with the desired physical stability. This physical stability is usually understood as the powder remaining in a state, in which the powder grains do not soften, collapse and stick together. As is common knowledge, the matrix of soluble coffee, which contains a large fraction of carbohydrates, is essentially in an amorphous form. As all amorphous systems, the soluble coffee matrix displays two distinct physical states, of key importance for its manufacturing and its storage stability. These states, which are known as the glassy and rubbery states, are separated by the glass-rubber transition. Consequently, the statement 'physical stability' implies that the soluble coffee matrix is in its glassy state.

The glass transition temperature of the soluble coffee matrix strongly decreases with increasing water content or water activity, as water is a strong plasticizer of the biopolymers occurring in soluble coffee. As soluble coffee invariably contains a certain amount of water, a small fraction of it left there after production but principally reabsorbed into the product by the repeated opening and closing of the soluble coffee jar by the consumer, it is consequently of major importance to assure that the soluble coffee matrix remains in the glassy state for reasonable concentrations of water. According to state-of-the-art technologies for the manufacturing of soluble coffee, this is achieved by precisely tuning the composition and molecular weight profile of the coffee extract.

Our invention proves a soluble coffee with improved stability of the aroma entrapped therein by removal of the undesirable compounds from the coffee matrix while at the same time assuring that the modified soluble coffee matrix shows similar or even improved characteristics of the glassy state. In particular, the modified soluble coffee matrices need to have a glass transition at a given critical water content or water activity, which is well above room temperature.

Surprisingly, we have found that a major fraction of the compounds from the coffee matrix which are involved in the degradation of coffee aroma compounds can indeed be removed while maintaining the physical stability of the modified coffee matrix at a sufficient or even improved level. The aroma-degrading compounds are removed from the coffee extract preferably either by treatment of the coffee extract with PVPP or immobilized PVP, or by ultrafiltration of the coffee extract. The coffee extract thus modified in composition can be used for the entrapment of the coffee aroma and the formation of a stable glassy matrix. Optionally, the remaining reactive non-aromatized matrix may be dried and recombined after drying with the glassy inert coffee matrix containing the entrapped coffee aroma. Using ultrafiltration as method in the preparation of an inert matrix, the glass transition temperature of the retentate to be used as encapsulation matrix can be increased with respect to the standard soluble coffee at the same water activity, for instance by 5°C to 40°C, preferably by 10 °C to 20 °C.

The solids content of the coffee extracts may vary from about 2% in case of batchwise bench-scale treatment of the extract by PVPP or immobilized PVP, to about 10% for the pilot-scale treatment of the extract by ultrafiltration to about 50% for continuous high-pressure industrial ultrafiltration units.

In the treatment of the aqueous coffee extract with PVPP or immobilized PVP, at least 5%, preferably more than 10% and more preferably more than 15% of the coffee solids are removed. We have witnessed that removal of such fractions of the solids from the aqueous coffee extract leads to partial or virtually complete removal of a group of chemical markers including: chlorogenic acids, chlorogenic lactones, caffeic and ferulic acids, hydroxymethyl furfural, caffeine and trigonelline. Major classes of non-volatile compounds suspected to induce aroma degradation, like free and bound phenolics, small molecular weight aldehydes, small molecular weight melanoidins are also largely or substantially removed in this way due to their similar physicochemical properties but could not be measured directly. The chemical markers can therefore be used to estimate the levels of the aroma deteriorating compounds which are the real reactive partners in aroma degradation. The level of these chemical markers allows evaluation of the separation process and prediction of the performance of the treated coffee matrix in aroma stabilization after encapsulation in the glassy state. Ideally at least 50%,, preferably at least 70%, and especially at least 85% of marker compounds are removed from the matrix

The PVPP to be used may be of any type and grade, as long as it is allowed in the manufacturing of foods. PVPP, which is a cross-linked form of polyvinylpyrrolidone (PVP), swells in water but is, because of the crosslinking, essentially insoluble. A specific type and grade of PVPP we have found to be particularly suitable is Polyclar® AT, but similar may be used.

In a batch-wise operation, the PVPP or immobilized PVP is added to the coffee extract at the desired concentration. This usually implies that the weight ratio of PVPP or immobilized PVP to coffee solids is set at a level defined by the degree of removal of coffee aroma-degrading compounds and the time allowed for the incubation. These weight ratios vary between 10:1 to 1:10⁵, preferably between 1:1 to 1:10⁴, more preferably between 1:10 and 1:10³. The incubation time of the PVPP treatment varies, depending on processing conditions and the desired degree of removal of the aroma degrading compounds. Typical incubation times vary between 1 minute to 24 h, preferably between 25 min and 6h, more preferably around 1 h. The temperature at which the incubation is carried out may be varied; usually no great effect is observed if the temperature is varied between 4 °C and 30 °C although incubation times may get somewhat longer at lower temperatures. Therefore, also temperatures outside this range may be employed, if desired.

After incubation, the PVPP or immobilized PVP with the bound aroma-degrading compounds from the coffee extract are removed via any procedure known to the person skilled in the art. Specific procedures, which may be used, include filtration and centrifugation. Filtration may be assisted by using either under- or overpressure; the pore size of the filter is chosen in such a way that essentially all PVPP or immobilized PVP is removed while not appreciably retaining the unbound coffee solids. For the specific embodiment of the present invention where Polyclar AT is used, we have beneficially used glass frits of porosity No. 3 as filtering aid. Sedimentation of the PVPP or immobilized PVP treated extract may be carried out using any type of lab-scale or industrial centrifuge. Removal of the PVPP or immobilized PVP by centrifuging is generally more straightforward the more diluted the extract; however, using high-speed centrifuges and ultracentrifuges, the PVPP or immobilized PVP may be sedimented even in fairly concentrated coffee extracts.

Centrifuging conditions and times may be set following standard routines as know to the person skilled in the art.

Optionally, washing steps may be employed to remove unbound compounds from the coffee extract from the PVPP or immobilized PVP after treatment. Such washing steps are to be carried out using water as washing agent (preferably cold water at 4°C). Washing steps include centrifuging or filtration in order to remove the PVPP or immobilized PVP and the liquid phase may be added to the treated coffee extract in order to enhance the levels of recovery of coffee solids.

For the ultrafiltration method, any common type of ultrafiltration membrane may be used in the ultrafiltration operation. Preferably, hollow-fibre membranes are used as they provide a maximum filter area and optimized flow patterns of both retentate and permeate at a minimum size of the filtering unit, but plane filters can be used as well. The filters can be made of any material commonly used for such purposes; polysulfone filters have proven their merit in the framework of the present invention but the invention is not limited to these filter materials.

The membrane used in the ultrafiltration of the aqueous coffee extract has a molecular weight cut-off between 3 kDa and 100 kDa, preferably 4 to 8 kDa. The fraction of solids in the aqueous coffee extract to be removed in order to achieve the desired degree of reduction of aroma degradation may vary, depending on the molecular weight cut off of the membrane. For a membrane with a molecular weight cut off of 3 kDa, the retentate to be used as matrix for the entrapment of coffee aroma consists of maximum 80%, preferably less than 50% and more preferably less than 25% of the total coffee solids. For a membrane with a molecular weight cut off of 6 kDa, , the retentate to be used as matrix for the entrapment of coffee aroma consists of maximum 80%, preferably less than 50% and more preferably less than 25% of the total coffee solids For a membrane with a molecular weight cut off of 100 kDa, the retentate to be used as matrix for the entrapment of coffee aroma consists of maximum 50%, preferably less than 30% and more preferably less than 25% of the total coffee solids.

The ultrafiltration may be carried out with a circulation of the coffee extract for any period of time. Such a process period is usually determined by the desired degree of removal of small molecules, the effective flux over the membrane and the ratio of extract volume to membrane surface area. Typically, a coffee extract is circulated for 1 h to 24 h, preferably between 2 h and 12 h and more preferably between 4 h and 8 h. The transmembrane pressure during the ultrafiltration operation may vary and will usually increase somewhat during the operation. This is caused by the clogging of pores by the coffee extract and may be minimized by operating the unit using cross-flow and/or black-flush mode. The concentration factor achieved during the ultrafiltration operation varies between about 2 and 20, preferably between 4 and 15, more preferably between 8 and 12.

The ultrafiltration of the coffee extract may be carried out in such a way that only one ultrafiltration operation is required. Usually, however, the extract will be prefiltered using a microfilter in order to remove coarse sediments. These coarse sediments may optionally be added to the retentate or permeate after ultrafiltration, optionally after a washing process. In addition, the ultrafiltration of the coffee extract may be carried out employing multiple ultrafiltration operations, including the use of various types of ultrafiltration membranes.

The treated glassy extract containing reduced levels of aroma degrading compounds is used as the starting material for the manufacturing of the soluble coffee. Depending on the solids content after removal of the aroma-degrading compounds, the extract may optionally be subjected to a concentration step to remove excess water. This concentration may be carried out following any of the common procedures used for this purpose, for instance by evaporation or reverse-osmosis.

Prior to drying, the coffee aroma is usually added, either in the form of a concentrated aroma fraction, an aqueous solution or an oil-based concentrate. Coffee aroma as used in the invention denotes any mixture of aroma compounds found in the aroma of coffee, but the coffee aroma need not be of natural origin. For instance, a natural coffee aroma extract or condensate can be enriched by adding certain amounts of defined aroma compounds. These added aroma compounds may be natural, for instance from non-coffee sources, or they may be nature identical. Such a coffee aroma enriched in certain aroma compounds will be denoted as a coffee aroma composition. The same nomenclature is applied to a coffee aroma which is prepared from single, pure aroma compounds or non-coffee aromas. Coffee aroma may be processed as the essentially pure composition containing only the aroma compounds (which will be denoted as the concentrate), but it may be also in the form of an extract or condensate containing an aroma carrier (for example coffee oil or water) and optionally non-volatile coffee compounds. The coffee aroma in such a carrier will also be denoted as a coffee aroma composition. The concentration of coffee aroma compounds in a coffee aroma composition may vary, depending on its source, its application and on the type of carrier used. For instance, if water is used as a carrier, the concentration of coffee aroma compounds is usually fairly low, for example between 0.001 % and 10%, often between 0.1 % and 1%. Oil-based aromas generally have an aroma concentration between 1% and 90%, preferably between 5% and 20%. Any aroma composition consisting for 90% or more of coffee aroma compounds will be denoted as pure coffee aroma or as coffee aroma concentrate. The coffee aroma according to the present invention may be obtained through any means known to a person skilled in the art, but is usually obtained by stripping roast and ground coffee with air and optionally moisture and condensing and concentrating the fluid containing the stripped aroma.

The subsequent drying of the aroma-containing extract is carried out in such a way that the aroma losses during drying are minimized and a powder is obtained which is in the glassy state at ambient temperature. The encapsulation or entrapment of the coffee aroma in the inert matrices may be carried out following any of the techniques commonly used in the art. Such techniques include, but are not limited to spray drying, freeze drying, melt extrusion, fluidized-bed drying, spray drying combined with agglomeration and vacuum drying. A general outline of the common techniques can for instance be found in J. Ubbink and A. Schoonman, 'Flavor Delivery Systems', Kirk-Othmer Encyclopedia of Chemical Technology, Wiley Interscience (2003).

The selection of the most appropriate technology is usually determined by optimally satisfying numerous demands on processing, powder properties and consumer preference. For instance, the choice of technology can be determined by the availability of equipment, its operating costs, the energy input required per unit product and similar considerations. When powder properties are of importance, this choice may be influenced by constraints on powder flowability, reconstitution behavior and mixing behavior. Consumer preference may play an important role in the selection of the technology in that powder appearance will influence the perception of the product by the consumer. Solely as an illustrative example, consider the case where the capsules containing encapsulated coffee aroma are to be use to fortify a spray-dried soluble coffee. Both from the processing perspective, the powder properties as well as the visual acceptance of the product by the consumer it makes sense to use spray-drying as drying technology. In another case, mentioned only because of illustrative purposes, freeze drying is the technology of choice because the capsules will be blended with a freeze-dried soluble coffee powder in order to optimize the appearance of the powder mixture. In another illustrative case, the capsules are produced by fluidized-bed drying and mixed with a freeze-dried soluble coffee powder providing a final powder mixture with a visually pleasing contrast between the freeze-dried coffee particles and the fluidized-bed dried aroma-containing capsules.

The soluble coffee powder of the present invention may be a homogeneous powder, based only grains of the glassy matrix, treated with coffee aroma. Another embodiment of the invention is a composite powder, in which a fraction of the powder grains are composed of the matrix whose composition has been modified according to the invention and other fraction may consist of grains of conventional soluble coffee, and/or of grains containing the permeate obtained when preparing the matrix by ultrafiltration operation. The use of the permeate (which contains aroma degrading compounds) may appear at first sight to be paradoxical but this is not so since the degradation of the aroma only occurs to any significant extent when the degrading compounds are physically combined in the same matrix particle. In the present invention this contact is substantially eliminated. In case of a composite powder, the coffee aroma is entrapped preferentially in the grains of the matrix of the invention. The fraction of the matrix of the invention in the composite powder may vary between 1% and 90%, preferably between 5% and 50% and more preferably between 7 and 25%.

The soluble coffee powder as prepared following the present invention may optionally be blended with one or more further common powder ingredients, in order to arrive at the desired form of the final product. Such other powder ingredients include sugar, milk powder, non-dairy creamers, foaming ingredients, bulking agents, anti-caking agents and bioactive ingredients optionally in encapsulated form.

### Examples

### Example 1: Preparation of inert matrix by treatment with polyvinylpolypyrrolidone

A 2% solution of soluble coffee in water (90 g soluble coffee, total weight 4500 g) was incubated with 225 g of polyvinylpolypyrrolidone in a batchwise fashion. After stirring for 1 h using a rotary agitator at room temperature, the suspension was filtered over a glass frit. Two washes were performed by resuspending the PVPP retained on the frit in 900 ml cold water (4 °C), stirring it for several minutes and filtering again. The filtrates were collected together and treated with a second batch of PVPP (113 g). After stirring for 1 h at room temperature, the suspension was treated as before. Finally, all filtrates were collected and freeze dried to yield 73 g of PVPP-treated matrix. Consequently, the overall recovery was 81%. The chlorogenic acid content was determined to be 20% of the feed.

### Example 2: Preparation of inert matrices by ultrafiltration

A bench scale hollow fiber system operating in a feed-and-bleed mode (continuous mode) was used for the ultrafiltration trials. A back-flush anti-fouling technique was applied, whereby periodic back-flushing of the permeate back into the retentate was performed. In feed-and-bleed operation, feed material is continuously fed to the membrane systems and both retentate and permeate are taken off at a constant flow rate.

The solids content of the coffee extract used for the ultrafiltration trials was 7.5%. The coffee was heated to 60°C for 5 min, cooled to room temperature and centrifuged in batches of 500 ml (Sorvall RC 5C, rotor GS3, 8900 rpm during 30 min at 16-20°C) in order to remove insoluble materials. The final coffee solution (total solid content 6.3%) was stored frozen until used for the ultrafiltration trials. This material is referred to as the ultrafiltration feed.

In order to study the effect of the various ultrafiltration conditions, three subsequent ultrafltration steps where applied. Before entering in the ultrafltration process, the feed was filtered through a microfilter in order to remove the large sediments and aggregates.

### Ultrafiltration step A

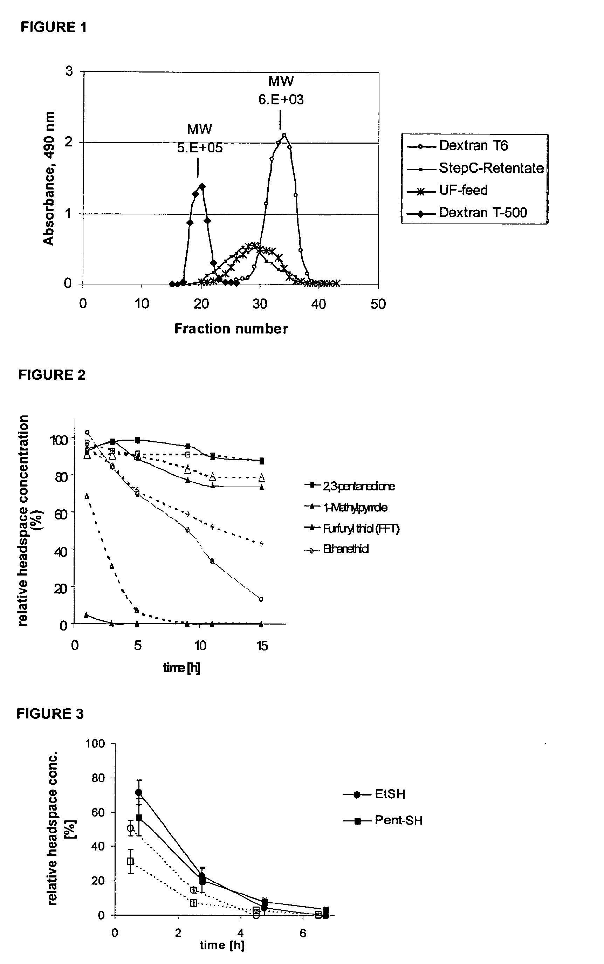

A pilot scale ultrafiltration step was carried out with repeated diafiltration of the ultrafiltration feed. About 40% of the solids were removed after step 1. The effect of the filter, with a molecular weight cut off of about 3 kDa, is clearly witnessed in the Figure 1 which the molecular weight distributions of polysaccharides in ultrafiltration retentate of the coffee extract

Part of the retentate was processed further in ultrafiltration step B. The product of this UF step will be denoted UF-treated sample A.

### Ultrafiltration step B

A bench scale ultrafiltration trial was carried out on the retentate of ultrafiltration trial 1. The molecular weight cut off of the membrane was now 10 kDa. In the retentate a further 10% reduction of solids was obtained. The product of this UF step will be denoted UF-treated sample B.

### Ultrafiltration step C

A separate bench scale hollow fiber ultrafiltration trial was carried out on the ultrafiltration feed with a very open membrane (membrane molecular weight cut off range of 50 to 100 kDa). The product of this UF step will be denoted UF-treated sample C. The effect of the filter, with a molecular weight cut off of about 3 kDa, is clearly seen in Figure 1

The properties of the various samples collected during the ultrafiltration trials are summarized in the Table below:

| **Sample** | **Raw material** | **Retention in UF step [%]** | **Overall retention [%]** | **Fraction of CQA removed [%]** |
|---|---|---|---|---|
| UF-treated sample A | Ultrafiltration feed | 63 | 54 | 60 |
| UF-treated sample B | Retentate of UF-treated sample A | 87 | 47 | 71 |
| U F-treated sample C | Ultrafiltration feed | 18 | 18 | 92 |

From the Table and Figure 1, it is observed that the composition of the coffee extract feed is considerably modified by the various UF steps. In particular, the samples are strongly depleted in small molecules, as witnessed in particular by the reduction in CQA content (CQA = caffeoylquinic acid, total of 3,4 and 5 isomers).

All products from the UF trials were freeze dried, giving free-flowing powders with a variation in surface structure and color.

### Example 3: A rapid laboratory test to establish the reduced levels of aroma degradation

The aroma stabilizing potential of the treated coffee extracts was estimated in solution. The relative change in the headspace concentration of a model volatile mixture was followed over time in presence of untreated and treated coffee matrix. SPME-GC-MS peak areas were measured at given time intervals and expressed as a percentage of peak area of the same volatile model mixture in plain water (blank reference). Figure 2, which is graph of the degradation kinetics of a model volatile mixture in the presence of UF retentate sample B (dashed line) and UF feed (solid line), and Figure 3, which is graph of the degradation kinetics of volatile thiols in presence of PVPP treated sample (solid line) and untreated coffee extract (dashed line), show that kinetic rate constants of volatile decay were in the range of 10 to 100 times lower in treated matrices than in the feed.

The coffee samples containing aroma were prepared by mixing the coffee extract and the model volatile mixture and stirring for 15 min at room temperature. Final solids contents of the solution was 1% and the volatile concentration as shown in the table below 800 µl of the sample were transferred into a 2 ml amber silane-treated glass vial and equilibrated 30 min before injection. The headspace of the samples was analyzed using a PAL autosampler. A SPME fiber coated with polydimethylsiloxane/divinylbenzene with 65 µm thickness (Supelco) was inserted into the headspace and allowed to equilibrate for 1 min exactly. Aroma compounds were desorbed in the injector port of the GC for 5 min at 240°C. During the first three minutes of desorption, the purge was off and for the two last 2 minutes, the purge was on. GC separation was performed on a HP 6890 equipped with a DB-Wax column (JandW Scientific, 30 m, 0.25 mm ID, 0.25 µm film, 1.0 mL/min constant flow) coupled to a HP 5973 mass spectrometer. The oven temperature was held at 35°C for 3 min then programmed to 170°C at 4°C/min, then to 220°C at 20°C/min and held at 220°C for 10 min. Mass spectra were acquired in scan mode from 29 to 300 amu. Vials containing blank volatile model mixture and flavoured coffee samples were put alternatively on the autosampler at to so that each sample had its reference prepared at the same time. The relative percentage was calculated with surface areas of volatile model reference and coffee sample measured at the same sampling time.

### List of volatile compounds used in this Example

| **Compounds** | **Final concentrations mg/L** |
|---|---|
| 2,3-Pentanedione | 10 |
| 1-Methylpyrrole | 2 |
| Ethanethiol | 2 |
| Pentanethiol | 2 |
| Furfurylthiol (FFT) | 2 |

### Example 4: The glassy state of the inert matrices

The glass transition temperature of an amorphous food material is an important predictive property used to determine the physical stability of a food matrix. In addition, it constitutes proof that a matrix is at least partially in the amorphous state, which is an important prerequisite for it being useful as encapsulation matrix e.g. for aroma compounds. The glass transition temperature of the three retentates of the ultrafiltration experiments of Example 2 were determined using Differential Scanning Calorimetry as the onset of the change in heat flow from the 2^{nd} heating run at 5 °C/min using a Seiko 5200 DSC 220C. Of the same samples, the water activity was determined using a Rotronic Hygrolab water activity sensor. As references, the feed of the ultrafiltration experiment and a reference soluble coffee are used. In this and subsequent Examples, the abbreviation 'UF' refers to the process or product of ultrafiltration

**Table: Glass transition of ultrafiltration permeates, and reference samples (ultrafiltration feed and soluble coffee reference)**

| **Sample UF** | **aw (25 °C)** | **Tg [°C]** | **T**_{**g**} **of soluble coffee at same a**_{**w**} **[°C]** |
|---|---|---|---|
| Retentate UF1 | 0.29 | 54.1 | 26.2 |
| Retentate UF2 | 0.31 | 59.1 | 24.1 |
| Retentate UF3 | 0.34 | 56.1 | 21.0 |
| UF feed | 0.34 | 26.4 | 21.0 |

At a given water activity, the T_{g} is higher for the UF retentates than for the UF feed or the soluble coffee reference. This is as expected, as the T_{g} increases with molecular weight, which is highest for the UF retentates. The glass transition temperature of the samples prepared from the UF feed is very similar to the T_{g} of the soluble coffee reference, indicating that the sample is in its original state, as it should. It should be emphasized that the T_{g} of the UF retentate depends on how precisely the ultrafiltration trials are executed and the relative enrichment of the larger molecules with respect to the smaller.

We conclude that the UF permeates form amorphous glassy matrices. Because of the chemical composition, matrices consisting of the UF retentates should be particularly useful for the encapsulation of coffee aroma and the preservation of coffee aroma in soluble coffee.

### Example 5: Encapsulation of coffee aroma in polyvinylpolypyrrolidone-treated and ultrafiltrated matrices

For the encapsulation trials, an aqueous coffee aroma extract was used. The treated powders of Examples 1 and 2 were dissolved at room temperature in fresh aqueous coffee aroma extract (15x of the stoichiometry coffee aroma) up to a total solid content of the concentrate of 25.9%. Because an aqueous extract was used, no water needed to be added. After complete dissolution of the powders and after homogenization, the resulting coffee extract was put in the freezer at -80°C and then freeze dried under controlled conditions.

After freeze-drying, a porous, glassy matrix was obtained for all treated matrices containing encapsulated coffee aroma. The glassy matrix could easily be crunched yielding a free flowing powder.

The retention of the aroma in these glassy matrices was determined using GC analysis. For a number of the impact compounds from coffee aroma, the results are summarized below. This demonstrates that the aroma retention time is satifactory.

| | **Retention after freeze-drying (%)** | | | |
|---|---|---|---|---|
| | *Capsules PVPP-treated matrix* | *Capsules UF-treated matrix A* | *Capsules UF-treated matrix B* | *Capsules UF-treated matrix* C |
| acetaldehyde | 78.5 | 89.3 | 45.7 | 85.4 |
| methyl formate | 53.4 | 72.0 | 65.4 | 36.4 |
| propanal | 61.3 | 90.4 | 51.7 | 90.4 |
| methyl acetate | 52.8 | 75.2 | 61.7 | 33.5 |
| methylfuran | 81.9 | 88.9 | 58.7 | 56.2 |
| 2-butanone | 75.2 | 83.7 | 71.6 | 99.3 |
| methanol | 78.9 | 82.8 | 77.4 | 46.0 |
| butanal | 86.1 | 65.3 | 70.7 | 78.7 |
| ethanol | 85.8 | 60.3 | 58.8 | 82.3 |
| 2,3-butanedione | 79.1 | 80.2 | 77.3 | 50.4 |
| 2,3-pentanedione | 66.3 | 57.5 | 76.2 | 45.1 |
| propanol | 70.2 | 73.2 | 69.3 | 85.6 |
| pyrazine | 77.3 | 55.5 | 66.0 | 82.6 |
| furfural | 85.3 | 80.3 | 63.4 | 78.5 |
| pyrrole | 79.9 | 62.0 | 48.8 | 87.8 |

### Example 7: Improved shelf life of coffee aroma entrapped in inert matrices: sensory assessment

Capsules with PVPP-treated and matrices treated by ultrafiltration were produced according to Example 5 with a concentration of coffee aroma which was 15X higher than in standard soluble coffee. As a reference, freeze-dried soluble coffee was prepared following standard practice, but with an aroma concentration 15X higher than in normal soluble coffee. The production of the boosted samples was kept identical with respect to the amount of aroma added, the total solids content before freeze-drying and the freeze-drying equipment and conditions. Sensory profiles of the samples were determined immediately after production of the samples (T₀). Samples for tasting were made up as follows: Temperature of water: 70°C. Type of water: 2/3 mineral water and 1/3 deionised water. The coffee powders were diluted according to concentrations mentioned in the Table below. The total amount of boosted material in the finished product is 6.5% by weight.

**Table: Coffee powders used for tasting. In the samples prepared for tasting, the capsules where complemented with non-aromatized soluble coffee base powder to have the same 1.5% by weight of coffee.**

| **Type of aroma-containing capsule** | **Concentrations used for tasting (%)** |
|---|---|
| Capsules with standard soluble coffee matrix | 0.1 |
| Capsules with PVPP-treated matrix | 0.1 |
| Capsules with UF-treated matrix A | 0.1 |
| Capsules with UF-treated matrix B | 0.1 |
| Capsules with UF-treated matrix C | 0.1 |

Immediately after production of the encapsulated aroma samples, coffee beverages prepared with these capsules are evaluated by a panel of 11 trained tasters, using 20 odour/flavour attributes. Assessors were asked to score each attribute on an 11-point scale ranging from 0 (not intense) to 10 (very intense).

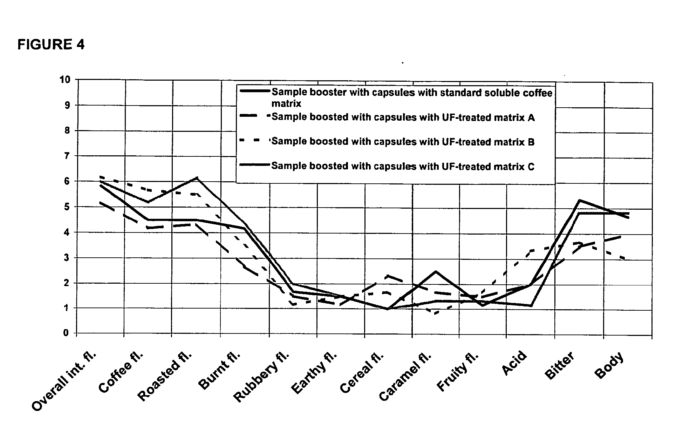

The results are shown in Figure 4 which is graph of sensory profiles after production of soluble coffee boosted with aroma capsules based on the treated matrices versus soluble coffee boosted with aroma capsules prepared using standard soluble coffee.

As can be seen from the graph, all products were found to have a high coffee character in aroma and flavour. Very minor differences in flavour profiles are observed for the various samples, but these differences are statistically not significant. Hence, we conclude that the soluble coffee matrices prepared from the PVPP-treated extracts and the ultrafiltrated coffee extracts do not significantly the sensory impact of the coffee to which they are added at the beginning of the storage. Soluble coffee can therefore be boosted with either type of capsules without significantly changing the initial sensory character of the soluble coffee.

A storage test was performed to assess the relative stability of the aroma in the soluble coffee powder of which matrix was depleted from aroma-degrading compounds by either PVPP treatment of by ultrafiltration and in the boosted soluble coffee. Both the soluble coffee with the treated matrices and the soluble coffee reference were equilibrated at a_{w} = 0.32 by storage at 25 °C in desiccators containing a saturated salt solution (MgCl₂). After equilibration, the samples were stored at two temperatures, -25°C and +37°C, for a three month period. The coffee base powder with no aroma reincorporated (Coffee A) was stored at -25°C and 37°C but at low moisture content (a_{w} = 0.17) to prevent degradation of non-volatiles and acidity development.

Triangle tests were conducted between samples of each product kept at -25°C and +37°C after 1 month storage (T₁) and after the full 3 months storage period (T₃). For tasting the beverages were reconstituted with 1.4 g non-aromatized soluble coffee powder (Coffee A) and 0.1 g boosted powder (soluble coffee powder of which the matrix is treated by PVPP or by ultrafiltration and boosted soluble coffee powder) per 100 ml cup.

**Table: Results of the triangle test for each product at 1 month and 3 months. The asterisks indicates that the products are significantly different (P < 0.05).**

| **Comparison -25 °C vs. +37 °C** | **1 month storage (T**_{**1**}**)** | | **3 month storage (T**_{**3**}**)** | |
|---|---|---|---|---|
| *Sample* | *Correct* | *Significance* | *Correct* | *Significance* |
| Soluble coffee reference | 13/20 | 0.04* | 12/20 | 0.013* |
| Sample boosted with capsules with PVPP-treated matrix | 8/21 | NS | 9/20 | NS |
| Sample boosted with capsules with UF-treated matrix A | 8/19 | NS | 5/20 | NS |
| Sample boosted with capsules with UF-treated matrix B | 10/19 | NS | 9/20 | NS |
| Sample boosted with capsules with UF-treated matrix C | 7/21 | NS | 8/20 | NS |

The data in the Table above is a measure of the effect of storage for 1 month and 3 months on the odour/flavour attributes of various coffee aroma compositions (lefthand column). The figures (X/Y) represent the number of assessors who evaluated the batches stored at -25°C and +37°C as different (X) over the total number of tests (Y). Hence, a high ratio of X to Y signifies that the coffee aroma composition was judged to be significantly different in odour/flavour after storage for 1 or 3 months.

The results from the triangle test show that, whereas for the soluble coffee reference, differences between the sample stored at -25 °C and +37 °C are significant already after one month of storage under severe conditions (T=37°C, a_{w} 0.32), no significant variations are observed for either the sample with the PVPP treated matrix nor for the three samples treated by ultrafiltration, even after three months of storage under these severe conditions. In our experience, a three month storage test at 37°C corresponds to a 1 year storage test at room temperature. We conclude that the entrapment of coffee aroma in matrices treated with PVPP or prepared using ultrafiltration is beneficial for preserving the initial aroma quality and strength of soluble coffee during storage, even under adverse storage conditions.

## Claims

1. An inert, glassy matrix for the entrapment of coffee aroma in which a proportion of those compounds, normally present in aqueous coffee extract and which degrade impact compounds in coffee aroma, has been removed.

2. A matrix according to claim 1, wherein the degradation compounds are removed by treatment of the coffee extract with polyvinylpolypyrrolidone or immobilized polyvinylpyrrolidone, with subsequent removal of the polyvinylpolypyrrolidone or polyvinylpyrrolidone containing fraction and using the treated extract to prepare the entrapment matrix;

3. A matrix according to claim 2, wherein the removal of the polyvinylpolypyrrolidone or polyvinylpyrrolidone containing fraction is by centrifugation or filtration.

4. A matrix according to claim 1, wherein the degradation compounds are removed by ultrafiltration of the coffee extract and using the retentate to prepare the solid entrapment matrix.

5. A matrix according to claim 4, wherein the ultrafiltration is carried out using a membrane with a molecular weight cut-off between 3 kDa and 100 kDa.

6. A matrix according to claim 5, wherein the ultrafiltration is carried out using a membrane with a molecular weight cut-off between 4 kDa and 8 kDa.

7. A matrix according to any one of the preceding claims, wherein the aroma degrading compounds removed to yield the inert matrix include phenolic compounds and melanoidins.

8. A matrix according to any one of the preceding claims, wherein aroma degrading compounds are removed from the aqueous coffee extract to yield the inert matrix as indicated by the reduction in concentration of a number of representative markers selected from chlorogenic acids, chlorogenic lactones, trigonelline, caffeine and hydroxymethylfurfural.

9. A matrix according to claim 8 in which at least 50% of marker compounds are removed.

10. A matrix according to claim 9 in which at least 70% of marker compounds are removed.

11. A matrix according to claims 10 in which at least 85% of marker compounds are removed.

12. A solid coffee aroma composition which comprises a matrix as claimed in any one of the preceding claims and entrapped coffee aroma
